# NOUVEAU FASCICULE DE BREVET EUROPEEN

(11) **EP 1 254 184 B2**
(45) Date de publication et mention de la décision concernant l'opposition: **20.02.2013**
(45) Mention de la délivrance du brevet: 22.11.2006
(21) Numéro de dépôt: 01923543.1
(22) Date de dépôt: 15.01.2001
(51) Int. Cl.: C08F 255/02, B29C 47/00

(54) **COMPOSITION A BASE DE POLYETHYLENE RETICULABLE, PROCEDE DE FABRICATION D'UN TUYAU ET TUYAU**
VERNETZBARE POLYETHYLENE ZUSAMMENSETZUNG, VERFAHREN ZUR HERSTELLUNG EINES ROHRES UND ROHR
CROSSLINKABLE POLYETHYLENE COMPOSITION, PROCESS FOR THE PRODUCTION OF A PIPE AND PIPE

(30) Priorité: 21.01.2000 BE 200000046
(43) Date de publication de la demande: 06.11.2002
(73) Titulaire: INEOS Manufacturing Belgium NV, 2040 Antwerpen (BE)
(72) Inventeur: CORNETTE, Martine, B-1980 Zemst (BE); LEFEBVRE, Laurent, B-1060 Bruxelles (BE); VANDEVIJVER, Eric, B-1200 Woluwe-Saint-Lambert (BE)
(74) Mandataire: Smith, Julian Philip Howard
(86) Numéro de dépôt international: PCT/EP2001/000424
(87) Numéro de publication internationale: WO 2001/053367

(56) Documents cités:
- GB-A- 1 450 943
- JP-A- 03 124 442
- JP-A- 09 208 637
- JP-A- 11 248 046
- JP-A- 11 320 651
- US-A- 3 646 155
- US-A- 5 324 779
- US-A- 5 476 889
- P. STARCK: 'Studies of the Comonomer Distributions in Low Density Polyethylenes Using Temperature Rising Elution Fractionation and Stepwise Crystallization by DSC.' POLYMER INTERNATIONAL vol. 40, no. 2, 1996, pages 111 - 122
- A. SHENOY, D. SAINI: 'Melt Flow Index: More Than Just A Quality Control Rheological Parameter. Part I' ADVANCES IN POLYMER TECHNOLOGY vol. 6, no. 1, 1986, pages 1 - 58

## Description

La présente invention concerne une composition à base de polyéthylène réticulable. Elle concerne plus particulièrement une composition à base d'un polyéthylène comprenant des groupements silanes hydrolysables. L'invention concerne également un procédé d'obtention de tuyaux à partir de cette composition, ainsi que les tuyaux ainsi obtenables.

Il est connu que du polyéthylène comprenant des groupements silanes hydrolysables peut être réticulé par l'action de l'eau. Le brevet US 3,646,155 décrit un procédé d'obtention d'une composition d'un polyéthylène réticulable par extrusion d'un mélange de polyéthylène, d'un peroxyde et d'un vinylalcoxysilane. Cette composition est ensuite mélangée avec une composition comprenant un catalyseur de condensation et façonnée, puis réticulée par exposition à de l'humidité.

Il est par ailleurs connu que des compositions comprenant un polyéthylène réticulable peuvent être utilisées pour la fabrication de tuyaux, plus particulièrement des tuyaux destinés au transport d'eau chaude. Les polyéthylènes utilisés à ce sujet sont généralement des copolymères de l'éthylène qui présentent une masse volumique spécifique relativement faible. Ils ont généralement un indice de fluidité relativement élevé. Les tuyaux obtenus à partir de ces polyéthylènes présentent l'inconvénient de ne pas résister à une pression élevée. Ils ne peuvent dès lors pas être utilisés pour le transport de fluides sous pression élevée.

La présente invention vise à procurer une composition de polyéthylène réticulable qui ne présente pas les inconvénients précités et qui permet la fabrication de tuyaux utilisables pour le transport de fluides sous pression élevée.

L'invention concerne dès lors une composition à base d'un polyéthylène réticulable comprenant de 0,05 à 0,24 groupements silanes hydrolysables par 100 unités -CH₂- et ayant une masse volumique standard MVS d'au moins 954 kg/m³ , un indice de fluidité MI₅ inférieur à 1,5 g/10 min et un indice de fluidité HLMI supérieur à 2 g/10 min, caractérisée en ce qu'elle est obtenue par le mélange en fondu d'un polyéthylène de base ayant une MVS d'au moins 956 kg/m³, un MI₂ supérieur à 0.15 g/10 min et un MI₅ inférieur à 10 g/10 min avec de 1.0 à 2.5 parts pour 100 parts de polyéthylène de base d'un vinylsilane et de 0.04 à 0.15 part pour 100 parts de polyéthylène de base d'un composé susceptible de générer des radicaux libres.

Le polyéthylène réticulable selon la présente invention est un polymère comprenant des groupements silanes hydrolysables. Par groupements silanes hydrolysables, on entend désigner des groupements du type Si - OR qui après hydrolyse à l'eau sont susceptibles de former des liens Si - O - Si entre différentes chaînes de polyéthylène.

Dans la présente invention, la teneur en groupements hydrolysables du polyéthylène réticulable est exprimée en nombre de groupements silanes hydrolysables par 100 unités -CH₂- présentes. Cette teneur peut être déterminée par analyse infrarouge FT-IR (Fourrier Transformation Infrared Spectroscopy). Dans le cadre de la présente invention, la teneur en groupements hydrolysables est déterminée par RMN.

Le polyéthylène réticulable selon la présente invention contient de préférence au moins 0,1 groupements de silanes hydrolysables par 100 unités -CH₂-. La teneur en groupements silanes hydrolysables ne dépasse de préférence pas 0,22 par 100 unités -CH₂-. La teneur en groupements silanes hydrolysables du polyéthylène réticulable selon la présente invention, est de préférence fixée de façon à obtenir, après hydrolyse, un polyéthylène réticulé présentant un taux de réticulation d'au moins 65 %, de préférence au moins 69 %, en poids. Le taux de réticulation est défini comme étant le taux d'insolubles dans le xylène chaud du polyéthylène réticulé mesuré selon la norme ISO/DIS 10147 (extraction pendant 8 heures à la température d'ébullition du xylène). Généralement, le taux de réticulation ne dépasse pas 85 % en poids. De préférence, le taux de réticulation ne dépasse pas 80 % en poids.

Dans la présente invention, les indices de fluidité MI₂ , MI₅ et HLMI sont mesurés selon la norme ASTM D 1238 (procédure B), sous une charge de, respectivement, 2,16 kg, 5 kg et 21,6 kg. Le polyéthylène réticulable selon la présente invention présente de préférence un indice de fluidité MI₅ qui ne dépasse pas 1,4 g/10 min. Le polyéthylène réticulable selon la présente invention présente de préférence un indice de fluidité MI₅ d'au moins 0,1 g/10 min. Particulièrement préféré est un polyéthylène réticulable ayant un MI₅ d'au moins 0,2 g/10 min. Le polyéthylène réticulable selon la présente invention présente de préférence un indice de fluidité HLMI d'au moins 5 g/10 min, tout particulièrement d'au moins 10 g/10 min. L'indice de fluidité HLMI ne dépasse généralement pas 100 g/10 min. De préférence, le HLMI ne dépasse pas 50 g/10 min. Le polyéthylène réticulable présente habituellement un MI₂ inférieur à 0,8, de préférence inférieur à 0,5 g/10 min. Son indice de fluidité MI₂ est généralement supérieur à 0,03, de préférence supérieur à 0,05 g/10 min. Il a été trouvé que lorsque l'indice de fluidité MI₅ du polyéthylène réticulable est supérieur à 1,5 g/10 min, il est difficile d'extruder un tube d'épaisseur constante à cause du phénomène de sagging (=écoulement par gravité à l'état fondu du tube). Par ailleurs, il a été trouvé que lorsque l'indice de fluidité HLMI du polyéthylène réticulable est inférieur à 2 g/10 min, la composition n'est pas apte à la fabrication de tuyaux ayant un aspect et des propriétés acceptables.

Dans la présente invention, la masse volumique standard MVS est mesurée selon la norme ASTM D792-66. Le polyéthylène réticulable présente de préférence une MVS d'au moins 955 kg/m³. La MVS du polyéthylène réticulable ne dépasse généralement pas 962, de préférence pas 960 kg/m³.

De bons résultats ont été obtenus avec une composition à base d'un polyéthylène réticulable obtenue par le greffage d'un polyéthylène de base au moyen d'un composé comprenant des groupements silanes hydrolysables. La composition selon l'invention est obtenue par le mélange en fondu d'un polyéthylène de base ayant une MVS d'au moins 956 kg/m³ , un MI₂ supérieur à 0,15 g/10 min et un MI₅ inférieur à 10 g/ 10 min avec de 1,0 à 2,5 parts (en poids) pour 100 parts (en poids) de polyéthylène de base d'un vinylsilane et de 0,04 à 0,15 part (en poids) pour 100 parts (en poids) de polyéthylène de base d'un composé susceptible de générer des radicaux libres.

Le polyéthylène de base mis en oeuvre dans le procédé d'obtention de la composition selon l'invention présente de préférence une MVS d'au moins 958 kg/m³ et ne dépassant pas 970 kg/m³. De bons résultats ont été obtenus avec un polyéthylène de base présentant une MVS d'au moins 960 kg/m³. Le polyéthylène de base peut être un homopolymère de l'éthylène ou un copolymère de l'éthylène avec de faibles quantités d'un autre monomère, tel que notamment du butène ou de l'hexène. Il est de préférence un homopolymère de l'éthylène.

Le polyéthylène de base présente de préférence un indice de fluidité MI₅ d'au moins 0,5 g/10 min et ne dépassant pas 8 g/10min. De bons résultats ont été obtenus avec un polyéthylène de base ayant un indice de fluidité MI₅ ne dépassant pas 6 g/10 min. Particulièrement préféré est un polyéthylène de base ayant un indice de fluidité MI₅ d'au moins 1,0 g/10 min. Le polyéthylène de base présente habituellement un MI₂ inférieur à 4, de préférence inférieur à 2 g/10 min. Son indice de fluidité MI₂ est généralement supérieur à 0,16, de préférence supérieur à 0,2 g/10 min.

Par vinylsilane, on entend désigner un silane comprenant au moins une fonction vinyle. Le vinylsilane mis en oeuvre dans le procédé d'obtention de la composition selon l'invention est habituellement un vinylsilane répondant à la formule générale R¹R²R³SiY dans laquelle Y désigne un radical hydrocarboné comprenant au moins une fonction vinyle, R¹ désigne un groupement hydrolysable et R² et R³ désignent, indépendamment, un groupement alkyle ou un groupement hydrolysable R¹. Le groupement hydrolysable R¹ peut être choisi parmi les radicaux du type alcoxy, acyloxy, oxime et amine. R¹ est de préférence un radical alcoxy comprenant de 1 à 6 atomes de carbone. De manière préférée on met en oeuvre un vinylsilane dans lequel R² et R³ sont également des groupements hydrolysables tels que définis ci-dessus. De bons résultats ont été obtenus avec des vinyl-trialcoxysilanes dans lesquels les groupements alcoxy comprenaient, chacun, de 1 à 4 atomes de carbone. Particulièrement préférés sont le vinyl-triethoxysilane et le vinyl-trimethoxysilane.

La quantité de vinylsilane mise en oeuvre dans le procédé d'obtention de la composition selon l'invention est de préférence d'au moins 1,5 part pour 100 parts de polyéthylène de base. De manière préférée, la quantité de vinylsilane mise en oeuvre ne dépasse pas 2,4 parts pour 100 parts de polyéthylène de base.

Par composé susceptible de générer des radicaux libres, on entend désigner tout composé capable de générer des radicaux libres dans le polyéthylène de base dans les conditions de mise en oeuvre. Le composé susceptible de générer des radicaux libres mis en oeuvre dans le procédé d'obtention de la composition selon l'invention est habituellement choisi parmi les peroxydes organiques, les peresters et les composés diazo. Les peroxydes organiques sont préférés. De bons résultats ont été obtenus avec les alkylperoxydes, tels que, notamment, le 2,5-diméthyl-2,5-di(t-butylperoxy)hexane et le 3,6,9-triéthyl-3,6,9-triméthyl-1,4,7-triperoxonane.

La quantité de composé susceptible de générer des radicaux libres mise en oeuvre dans le procédé d'obtention de la composition selon l'invention est de préférence d'au moins 0,045 part pour 100 parts de polyéthylène de base. De manière préférée, la quantité mise en oeuvre ne dépasse pas 0,12 part pour 100 parts de polyéthylène de base.

Le mélange en fondu est habituellement effectué à une température entre 140 et 300 °C; de préférence entre 150 et 250 °C. La durée du mélange varie habituellement de 2 secondes à 10 minutes. Le mélange en fondu du polyéthylène de base, du vinylsilane et du composé susceptible de générer des radicaux libres peut être effectué dans tout dispositif connu à cet effet, tel que des malaxeurs internes ou externes. Le mélange est de préférence effectué dans un malaxeur continu, plus particulièrement dans une extrudeuse.

La composition selon l'invention se présente généralement sous la forme de granules, obtenus, de manière connue, en coupant le jonc sortant d'une extrudeuse en granules. La composition selon l'invention peut également se présenter à l'état de poudres obtenues par broyage ou micronisation des granules.

La composition selon l'invention contient de préférence au moins 95 % en poids de polyéthylène réticulable. Particulièrement préférée est une composition comprenant au moins 99 % en poids, et plus particulièrement encore au moins 99,7 % en poids, de polyéthylène réticulable. La composition selon l'invention peut contenir, outre le polyéthylène réticulable, d'autres additifs habituellement présents dans les compositions de polyoléfines. La composition selon l'invention ne contient de préférence qu'une faible quantité d'additifs, plus particulièrement d'un antioxydant. Elle contient, de préférence, moins que 0,3 % en poids d'un antioxydant.

Les compositions selon l'invention sont de préférence conservées à l'abri d'humidité jusqu'à leur utilisation.

Les compositions selon l'invention conviennent pour être mises en oeuvre selon les procédés classiques de façonnage d'articles et plus particulièrement selon les procédés d'extrusion. L'invention concerne dès lors également un procédé de fabrication d'un article façonné dans lequel, dans une première étape, une composition à base d'un polyéthylène réticulable selon l'invention est façonnée sous la forme d'un article puis, dans une deuxième étape, l'article issu de la première étape est soumis à une hydrolyse de façon à réticuler le polyéthylène réticulable.

Les compositions selon l'invention conviennent particulièrement bien pour l'extrusion de tuyaux, notamment de tuyaux pour le transport de fluides sous pression, tel que l'eau et le gaz.

L'invention concerne dès lors également un procédé de fabrication d'un tuyau dans lequel, dans une première étape, une composition à base d'un polyéthylène réticulable selon l'invention est extrudée sous la forme d'un tuyau, puis dans une deuxième étape, le tuyau obtenu à l'issue de la première étape est soumis à une hydrolyse de façon à réticuler le polyéthylène réticulable.

Dans la première étape du procédé de fabrication d'un tuyau selon l'invention, l'extrusion peut être effectuée selon les conditions usuelles d'extrusion de tuyaux en polyéthylène. La fabrication de tuyaux par extrusion d'une composition selon l'invention s'effectue avantageusement sur une chaîne d'extrusion comprenant une extrudeuse équipée d'une tête hélicoïdale, un calibreur et un dispositif de tirage. L'extrusion est généralement réalisée sur une extrudeuse du type mono-vis et à une température de 150 à 230 °C. Le calibrage des tuyaux peut être effectué par la création d'une dépression à l'extérieur du tuyau et/ou par la création d'une surpression à l'intérieur du tuyau.

Dans la première étape du procédé, la composition est avantageusement mise en oeuvre en présence d'un catalyseur de réticulation. Par catalyseur de réticulation, on entend désigner tout catalyseur qui permet d'accélérer la réticulation du polyéthylène réticulable lorsqu'il est soumis à une hydrolyse. Le catalyseur de réticulation est habituellement choisi parmi les carboxylates métalliques, les composés organométalliques, des bases organiques et des acides.

Le catalyseur est de préférence choisi parmi les carboxylates métalliques, et plus particulièrement parmi les carboxylates de plomb, de cobalt, de fer, de nickel, de zinc et d'étain. Les carboxylates organiques et inorganiques d'étain sont particulièrement préférés. De bons résultats ont été obtenus avec les dialkylcarboxylates d'étain, et plus particulièrement avec le dibutyl dilaurate d'étain. La quantité de catalyseur de réticulation ajoutée à la composition selon l'invention lors de la première étape du procédé de fabrication est généralement comprise entre 0,12 et 0,47 mole par 100 moles de groupements silanes hydrolysables présents dans le polyéthylène réticulable. Cette quantité est de préférence d'au moins 0,13 mole par 100 moles. De manière préférée, elle ne dépasse pas 0,33 mole par 100 moles de groupements silanes hydrolysables présents dans le polyéthylène réticulable.

Le catalyseur de réticulation est avantageusement ajouté à la composition selon l'invention sous la forme d'un mélange-maître. Ce mélange-maître contient habituellement de 0,2 à 0,52 % en poids de catalyseur de réticulation, le solde étant constitué de polyéthylène. Ce polyéthylène présente de préférence les mêmes caractéristiques du polyéthylène de base tel que décrit ci-dessus.

Il va de soi, que, dans la première étape du procédé de fabrication d'un tuyau, les compositions selon l'invention peuvent également être mélangées avec les additifs de mise en oeuvre usuels des polyoléfines, tels que des stabilisants (des agents antioxydants et/ou anti-UV), des agents antistatiques et des agents de mise en oeuvre ("processing aid") ainsi que des pigments. Ces additifs peuvent être mélangés avec la composition selon l'invention de façon isolée ou ils peuvent faire partie d'un mélange-maître. Selon une variante du procédé de fabrication, les additifs décrits ci-dessus font partie du mélange-maître comprenant le catalyseur de réticulation. La quantité d'additifs mise en oeuvre ne dépasse en général pas 5 parts (en poids) pour 100 parts de composition selon l'invention mise en oeuvre. Elle ne dépasse de préférence pas 3 parts. La quantité d'additifs est habituellement d'au moins 0,3 part pour 100 parts de composition. Selon une autre variante du procédé de fabrication d'un tuyau, les compositions selon l'invention sont mélangées avec une faible quantité d'un agent nucléant, de préférence avec du talc. La quantité d'agent nucléant ou de talc mise en oeuvre ne dépasse en général pas 1 part en poids pour 100 parts de composition. L'ajout d'un agent nucléant ou du talc à la composition peut se faire séparément ou via l'ajout d'un mélange-maître, notamment par l'ajout au mélange-maître comprenant le catalyseur de réticulation. L'ajout d'un agent nucléant et, en particulier, de talc à la composition permet d'obtenir une amélioration de la résistance à la pression à long terme des tuyaux.

Selon une forme particulière d'exécution du procédé de fabrication d'un tuyau selon l'invention, la composition à base de polyéthylène réticulable est fabriquée in situ, lors de la première étape du procédé; c'est-à-dire lors de l'extrusion d'un tuyau. A cette fin, un mélange comprenant un polyéthylène de base, un vinylsilane et un composé susceptible de générer des radicaux libres, et, le cas échéant, un catalyseur de réticulation et/ou d'autres additifs, est extrudé sous la forme d'un tuyau lors de la première étape du procédé de fabrication d'un tuyau.

Dans la deuxième étape du procédé de fabrication d'un tuyau selon l'invention, le tuyau issu de la première étape est soumis à une hydrolyse de façon à réticuler le polyéthylène réticulable. L'hydrolyse se fait habituellement en présence d'eau. Généralement, l'hydrolyse s'effectue en exposant le tuyau à de l'eau, de la vapeur ou de l'humidité à une température de 10 à 150 °C. La durée d'exposition optimale varie suivant la température et l'épaisseur du tuyau, elle est généralement comprise entre quelques minutes et plusieurs jours.

L'hydrolyse peut se faire en conservant le tuyau durant quelques jours dans des conditions ambiantes de température et d'humidité. L'hydrolyse est de manière préférée réalisée en plaçant le tuyau issu de la première étape dans une atmosphère comprenant de la vapeur d'eau, à une température de 60 à 130 °C ou en présence d'eau chaude, maintenue à une température de 60 à 100 °C. Dans le cas où le tuyau est placé dans une atmosphère comprenant de la vapeur d'eau, le traitement est effectué typiquement durant une période d'au moins 1 heure. Dans ce cas, la durée de traitement ne dépasse généralement pas quelques semaines.

Dans le cas où le tuyau est placé en présence d'eau chaude, la durée de traitement est généralement d'au moins 1 heure à quelques semaines. Il va de soi qu'il est possible d'effectuer la deuxième étape du procédé selon l'invention après l'installation du tuyau. De cette façon, il est possible de souder les tuyaux les uns aux autres par les procédés classiques de soudage de tuyaux en polyéthylène non réticulés. Après soudage et/ou installation, la deuxième étape du procédé peut alors être effectuée en faisant circuler dans les tuyaux de la vapeur ou de l'eau chaude comme décrit ci-dessus.

A l'issue de la deuxième étape du procédé de fabrication, on obtient généralement un tuyau comprenant un polyéthylène réticulé ayant un taux de réticulation tel que défini ci-dessus, d'au moins 65 %, de préférence d'au moins 70 %, en poids. Généralement, le taux de réticulation ne dépasse pas 85 % en poids. De préférence, le taux de réticulation ne dépasse pas 80 %.

Le procédé de fabrication selon l'invention permet l'obtention de tuyaux ayant une MVS supérieure à 950 kg/m³ voire supérieure à 953 kg/m³.

Le procédé peut être appliqué à la fabrication de tuyaux de dimensions très variables, de diamètre allant de quelques mm à plusieurs dm. Le procédé selon l'invention peut être appliqué à la fabrication de tuyaux en polyéthylène réticulé de grosse épaisseur, notamment d'une épaisseur supérieure ou égale à 1 cm.

Les tuyaux obtenus par le procédé de fabrication selon l'invention se caractérisent par une bonne résistance à la propagation lente de fissures (ESCR), traduite par un temps à la rupture, tel que mesuré selon la méthode décrite dans la norme ISO F/DIS 13479 (1996) [à 80 °C, sur un tube entaillé ayant un diamètre de 110 mm et une épaisseur de 10 mm et sous une contrainte de 5,4 MPa] généralement supérieur à 5000 heures, voire supérieur à 10000 heures, même supérieur à 15000 heures.

Les tuyaux obtenus par le procédé de fabrication selon l'invention se caractérisent également par une bonne résistance à la propagation rapide de fissures (RCP), traduite par un arrêt de la propagation de fissure à une pression interne généralement au moins égale à 12 bar, tel que mesuré, à -30 °C, sur un tube d'un diamètre de 110 mm et d'une épaisseur de 10 mm selon la méthode S4 décrite dans la norme ISO F/DIS 13477(1996).

Les tuyaux obtenus par le procédé de fabrication selon l'invention se caractérisent en plus :
- par une bonne résistance à la pression, traduite par un temps à la rupture généralement supérieur à 1000 heures, tel que mesuré, à 20 °C, sur un tube d'un diamètre de 32 mm et d'une épaisseur de 3 mm, et sous une contrainte de 13,6 MPa selon la norme ISO 1167;
- une bonne stabilité thermique, traduite par un temps de rupture généralement supérieur à 15000 heures, tel que mesuré par un test pression sous une contrainte de 2,8 MPa, à 110 °C, selon la norme ISO 1167;
- une bonne résistance aux condensats de gaz, traduite par un temps de rupture généralement supérieur à 1000 heures, tel que mesuré à 80 °C sur un tube d'un diamètre de 32 mm et d'une épaisseur de 3 mm, rempli d'un mélange de condensats de gaz synthétique (comprenant 50 % de n-décane et 50 % de triméthylbenzène), sous une contrainte de 2 MPa selon la méthode décrite dans la norme EN 921 ;
- une bonne résistance chimique; et
- une bonne résistance à l'abrasion.

Les tuyaux obtenus par le procédé de fabrication selon l'invention ont une résistance à la pression à long terme qui permet de leur attribuer un classement MRS supérieur au classement MRS 10 selon la norme ISO/TR 9080. Les tuyaux obtenus par le procédé ont une résistance à la pression qui permet de leur attribuer un classement MRS de 11,2, voire de 12,5 selon la norme ISO/TR 9080.

L'invention concerne dès lors également les tuyaux, plus particulièrement les tuyaux pour le transport de fluides sous pression, susceptibles d'être obtenus par le procédé de fabrication selon l'invention.

L'invention concerne également un tuyau à base d'un polyéthylène réticulé ayant une classification MRS selon la norme ISO/TR 9080 de 11,2.

L'invention concerne plus particulièrement un tuyau à base d'un polyéthylène réticulé ayant une classification MRS selon la norme ISO/TR 9080 de 12,5.

Les tuyaux selon l'invention sont dès lors bien appropriés pour le transport de fluides sous pression, tel que l'eau et le gaz. Ils peuvent être utilisés dans des gammes de température très larges, plus larges que des tuyaux en polyéthylène non réticulé. Les tuyaux selon l'invention peuvent être utilisés pour la distribution d'eau chaude en réseau, pour le transport de pétrole.

Les tuyaux à base d'un polyéthylène réticulé selon l'invention peuvent être raccordés les uns aux autres au moyen d'une pièce de raccord constituée de la composition à base d'un polyéthylène réticulable selon l'invention. A ce sujet, la pièce de raccord est fabriquée par extrusion, par injection ou par moulage à partir de la composition à base d'un polyéthylène réticulable selon l'invention, puis conservée à l'abri de l'humidité jusqu'à son utilisation. La pièce de raccord est avantageusement d'abord soudée au tuyau réticulé par un des procédés classiques de soudage, puis exposée à de l'humidité afin d'être réticulée.

Les exemples qui suivent sont destinés à illustrer l'invention.

### Exemple 1

Une composition à base de polyéthylène réticulable a été fabriquée en extrudant, sur une extrudeuse double vis avec un profil de température de 175 à 215 °C, un mélange de 100 parts d'un polyéthylène de base ayant un MI₅ de 3 g/10min, un MI₂ de 0,8 g/10min et une MVS de 961 kg/m³ avec 2 parts de vinyltriméthoxysilane et 0,09 part de 2,5-diméthyl-2,5-di(t-butylperoxy)hexane.

La composition de polyéthylène réticulable greffé par des groupements silanes hydrolysables ainsi obtenue présentait un HLMI de 18 g/10 min, MI₅ de 0,5 g/10min, un MI₂ < 0,1 g/10 min et une MVS de 955 kg/m³.

95 parts de cette composition ont ensuite été mélangées avec 5 parts d'un mélange-maître à base de polyéthylène comprenant 0,36 % en poids de dibutyldilaurate d'étain et 9 % en poids d'anti-oxydants. Ce mélange a été extrudé sous la forme de tuyaux sur une extrudeuse mono-vis à un profil de température de 175 à 190 °C.

Un tuyau d'un diamètre de 50 mm et d'une épaisseur de 2,9 mm a notamment été obtenu. Ce tuyau a été réticulé par son immersion dans un bain d'eau maintenu à une température de 80 °C, pendant 64 heures.

Ce tuyau obtenu présentait :
- un taux de réticulation de 73 % ;
- un temps de rupture mesuré dans un test pression selon la norme ISO 1167 à 20 °C et sous une contrainte de 13,6 MPa, supérieur à 3500 heures;
- une résistance à la pression à long terme déterminée sur base des courbes de régression obtenues à 20, 95 et 110 °C selon la norme ISO/TR 9080, qui dépasse 12,5 MPa; ce qui permet d'attribuer à ce tuyau un classement MRS 12,5;
- une résistance à la propagation lente de fissures (ESCR) [mesurée selon la méthode décrite dans la norme ISO F/DIS 13479 (1996), à 80 °C, sur un tube entaillé ayant un diamètre de 110 mm et une épaisseur de 10 mm et sous une contrainte de 5,4 MPa] traduite par un temps à la rupture dépassant 14000 heures;
- une résistance à la propagation rapide de fissures (RCP) [mesurée, à -30 °C, sur un tube d'un diamètre de 110 mm et d'une épaisseur de 10 mm selon la méthode S4 décrite dans la norme ISO F/DIS 13477(1996)] traduite par un arrêt de la propagation de fissure à une pression interne supérieure à 12 bar.

Les tuyaux obtenus présentaient un excellent compromis de fluage/ESCR/RCP qui les rend aptes à être utilisés pour la fabrication d'un réseau de distribution de fluides sous pression.

### Exemple 2

Une composition de polyéthylène réticulable a été fabriquée selon la méthode décrite dans l'exemple 1 mais en mettant en oeuvre 0,05 part de 2,5-diméthyl-2,5-di(t-butylperoxy)hexane (au lieu de 0,09 part).

La composition à base de polyéthylène réticulable ainsi obtenue présentait un HLMI de 24 g/10 min, un MI₅ de 1,3 g/10min et une MVS de 956 kg/m³.

Des tuyaux ont été fabriqués au moyen de cette composition selon le procédé décrit à l'exemple 1. Les tuyaux ainsi obtenus présentaient des caractéristiques voisines de celles obtenues à l'exemple 1.

### Exemple comparatif 3

Une composition de polyéthylène réticulable a été fabriquée selon la méthode décrite dans l'exemple 1 mais en mettant en oeuvre un polyéthylène de base ayant une MVS de 950 kg/m³, un MI₅ de 1,3 g/10min et un MI₂ de 0,2 g/10min.

La composition à base de polyéthylène réticulable ainsi obtenue présentait un MI₅ de 0,2 g/10min, un MI₂ < 0,1 g/10min et une MVS de 946 kg/m³.

Des tuyaux ont été fabriqués au moyen de cette composition selon le procédé décrit à l'exemple 1.

Les tuyaux ainsi obtenus présentaient les caractéristiques suivantes :
- un temps de rupture mesuré dans un test pression selon la norme ISO 1167 à 20 °C et sous une contrainte de 13,6 MPa d'environ 100 heures;
- une résistance à la pression à long terme déterminée sur base des courbes de régression obtenues à 20, 95 et 110 °C selon la norme ISO/TR 9080 inférieure à 11,2 MPa.

Les tuyaux obtenus ne satisfaisaient pas aux caractéristiques permettant de leur attribuer un classement MRS de 12,5, ni de 11,2.

### Exemple comparatif 4

Une composition de polyéthylène réticulable a été fabriquée selon la méthode décrite dans l'exemple 1 mais en mettant en oeuvre un polyéthylène de base ayant une MVS de 960 kg/m³, un MI₅ de 0,5 g/10min et un MI₂ de 0,15 g/10min.

La composition à base de polyéthylène réticulable ainsi obtenue présentait un HLMI de 2 g/10 min, un MI₅ < 0,2 g/10min, un MI₂ < 0,1 g/10 min et une MVS de 955 kg/m³.

Il a été tenté de fabriquer des tuyaux au moyen de cette composition selon le procédé décrit à l'exemple 1. La fabrication de tuyaux ayant un aspect acceptable n'a pas été réalisable. Les seuls tuyaux obtenables avec cette composition n'avaient pas une épaisseur constante et présentaient une surface très rugueuse. Leurs propriétés mécaniques n'étaient pas satisfaisantes pour une utilisation pour le transport de fluides sous pression.

## Revendications

1. Composition à base d'un polyéthylène réticulable comprenant de 0.05 à 0.24 groupements silanes hydrolysables par 100 unités -CH₂- et ayant une masse volumique standard MVS d'au moins 954 kg/m³, un indice de fluidité MI₅ inférieur à 1.5 g/10 min et un indice de fluidité HLMI supérieur à 2 g/10 min, **caractérisée en ce qu'**elle est obtenue par le mélange en fondu d'un polyéthylène de base ayant une MVS d'au moins 956 kg/m³, un Ml₂ supérieur à 0.15 g/10 min et un Ml₅ inférieur à 10 g/10 min avec de 1.0 à 2.5 parts pour 100 parts de polyéthylène de base d'un vinylsilane et de 0.04 à 0.15 part pour 100 parts de polyéthylène de base d'un composé susceptible de générer des radicaux libres.

2. Composition selon la revendication 1, **caractérisée en ce que** le polyéthylène réticulable présente un indice de fluidité MI₂ inférieur à 0.8 g/10min et supérieur à 0.03 g/10 min.

3. Composition selon l'une quelconque des revendications 1 et 2, **caractérisée en ce que** le polyéthylène réticulable a une teneur en groupements silanes hydrolysables telle que, après hydrolyse, le polyéthylène réticulé présente un taux de réticulation d'au moins 65% en poids.

4. Composition selon l'une quelconque des revendications 1 à 3, **caractérisée en ce que** le polyéthylène de base présente une MVS d'au moins 958 kg/m³.

5. Composition selon l'une quelconque des revendications 1 à 4, **caractérisée en ce que** le polyéthylène de base présente un indice de fluidité MI₂ inférieur à 2 g/10 min et supérieur à 0.16 g/10 min.

6. Procédé de fabrication d'un tuyau dans lequel dans une première étape, une composition à base d'un polyéthylène réticulable selon l'une quelconque des revendications 1 à 5, est extrudée sous la forme d'un tuyau, puis dans une deuxième étape, le tuyau issu de la première étape est soumis à une hydrolyse de façon à réticuler le polyéthylène réticulable.

7. Procédé selon la revendication 6 **caractérisé en ce que**, dans la première étape, la composition est mise en oeuvre en présence d'un catalyseur de réticulation.

8. Procédé selon l'une quelconque des revendications 6 ou 7 **caractérisé en ce que** la composition à base d'un polyéthylène réticulable est fabriquée in situ lors de la première étape.

9. Procédé selon l'une quelconque des revendications 6 à 8, **caractérisé en ce que** l'hydrolyse est effectuée en présence de vapeur d'eau à une température de 60 à 130°C ou en présence d'eau chaude à une température de 60 à 100 °C.

10. Tuyau comprenant un polyéthylène réticulé susceptible d'être obtenu par le procédé selon l'une quelconque des revendications 6 à 9.

11. Tuyau comprenant un polyéthylène réticulé ayant une classification MRS selon la norme ISO/TR 9080 de 11.2.

12. Tuyau comprenant un polyéthylène réticulé ayant une classification MRS selon la norme ISO/TR 9080 de 12.5.

## Claims

1. Composition based on a cross-linkable polyethylene comprising 0.05 to 0.24 hydrolysable silane groups per 100 units -CH₂- and having a standard volumetric mass SVM of at least 954 kg/m³, an MI₅ fluidity index of less than 1.5 g/10 min, and an HLMI fluidity index greater than 2 g/10 min, **characterised in that** it is obtained by the mixing in the molten state of a base polyethylene having an SVM of at least 956 kg/m³, an MI₂ greater than 0.15 g/10 min, and an MI₅ less than 10 g/10 min, with 1.0 to 2.5 parts per 100 parts of base polyethylene of a vinyl silane and from 0.04 to 0.15 parts per 100 parts of base polyethylene of a compound capable of generating free radicals.

2. Composition according to Claim 1, **characterised in that** the cross-linkable polyethylene exhibits an MI₂ fluidity index less than 0.8 g/10 min and greater than 0.03 g/10 min.

3. Composition according to either of Claims 1 or 2, **characterised in that** the cross-linkable polyethylene has a content of hydrolysable silane groups such that, after hydrolysis, the cross-linked polyethylene exhibits a cross-linking rate of at least 65 % by weight.

4. Composition according to any one of Claims 1 to 3, **characterised in that** the base polyethylene exhibits an SVM of at least 958 kg/m³.

5. Composition according to any one of Claims 1 to 4, **characterised in that** the base polyethylene exhibits a fluidity index MI₂ less than 2 g/10 min and greater than 0.16 g/10 min.

6. Method of manufacture of a pipe, in which in a first step a composition based on a cross-linkable polyethylene according to any of Claims 1 to 5 is extruded in the form of a pipe, then in a second step the pipe derived from the first step is subjected to hydrolysis in such a way as to cross-link the cross-linkable polyethylene.

7. Method according to Claim 6, **characterised in that** in the first step the composition is used in the presence of a cross-linking catalyst.

8. Method according to either of Claims 6 or 7, **characterised in that** the composition based on a cross-linkable polyethylene is manufactured in situ during the first step.

9. Method according to any of Claims 6 to 8, **characterised in that** the hydrolysis is carried out in the presence of water vapour at a temperature of 60 to 130 °C or in the presence of hot water at a temperature of 60 to 100 °C.

10. Pipe comprising a cross-linked polyethylene capable of being obtained by the method according to any of Claims 6 to 9.

11. Pipe comprising a cross-linked polyethylene having an MRS classification according to Standard ISO/TR 9080 of 11.2.

12. Pipe comprising a cross-linked polyethylene having an MRS classification according to Standard ISO/TR 9080 of 12.5

## Patentansprüche

1. Zusammensetzung auf der Basis eines vernetzbaren Polyethylens, das 0,05 bis 0,24 hydrolysierbare Silan-Gruppen pro 100 Einheiten -CH₂- umfasst und eine Standardvolumenmasse SVM von mindestens 954 kg/m³, einen Fließindex Ml₅ unter 1,5 g/10 min und einen Fließindex HLMI über 2 g/10 min aufweist, **dadurch gekennzeichnet, dass** sie durch das Schmelzmischen eines Grund-Polyethylens mit einer SVM von mindestens 956 kg/m³, einem Ml₂ über 0,15 g/10 min und einem Ml₅ unter 10 g/10 min mit 1,0 bis 2,5 Teilen pro 100 Teile Grund-Polyethylen eines Vinylsilans und 0,04 bis 0,15 Teilen pro 100 Teile Grund-Polyethylen einer Verbindung, die freie Radikale erzeugen kann, erhalten wird.

2. Zusammensetzung nach Anspruch 1, **dadurch gekennzeichnet, dass** das vernetzbare Polyethylen einen Fließindex Ml₂ unter 0,8 g/10 min und über 0,03 g/10 min aufweist.

3. Zusammensetzung nach irgendeinem der Ansprüche 1 und 2, **dadurch gekennzeichnet, dass** das vernetzbare Polyethylen einen Gehalt an hydrolysierbaren Silan-Gruppen derart aufweist, dass nach Hydrolyse das vernetzte Polyethylen einen Vernetzungsgrad von mindestens 65 Gew.-% aufweist.

4. Zusammensetzung nach irgendeinem der Ansprüche 1 bis 3, **dadurch gekennzeichnet, dass** das Grund-Polyethylen eine SVM von mindestens 958 kg/m³ aufweist.

5. Zusammensetzung nach irgendeinem der Ansprüche 1 bis 4, **dadurch gekennzeichnet, dass** das Grund-Polyethylen einen Fließindex Ml₂ unter 2 g/10 min und über 0,16 g/10 min aufweist.

6. Verfahren zur Herstellung eines Rohrs, bei dem in einem ersten Schritt eine Zusammensetzung auf der Basis eines vernetzbaren Polyethylens nach irgendeinem der Ansprüche 1 bis 5 in Form eines Rohrs extrudiert wird, dann in einem zweiten Schritt das aus dem ersten Schritt hervorgegangene Rohr einer Hydrolyse auf solche Weise unterzogen wird, dass das vernetzbare Polyethylen vernetzt wird.

7. Verfahren nach Anspruch 6, **dadurch gekennzeichnet, dass** in dem ersten Schritt die Zusammensetzung in Anwesenheit eines Vernetzungskatalysators eingesetzt wird.

8. Verfahren nach irgendeinem der Ansprüche 6 oder 7, **dadurch gekennzeichnet, dass** die Zusammensetzung auf der Basis eines vernetzbaren Polyethylens in situ während des ersten Schritts hergestellt wird.

9. Verfahren nach irgendeinem der Ansprüche 6 bis 8, **dadurch gekennzeichnet, dass** die Hydrolyse in Anwesenheit von Wasserdampf bei einer Temperatur von 60 bis 130°C oder in Anwesenheit von warmem Wasser bei einer Temperatur von 60 bis 100°C bewirkt wird.

10. Rohr, umfassend ein vernetztes Polyethylen, das gemäß dem Verfahren nach irgendeinem der Ansprüche 6 bis 9 erhalten werden kann.

11. Rohr, umfassend ein vernetztes Polyethylen, das eine MRS-Klassifikation gemäß der Norm ISO/TR 9080 von 11,2 aufweist.

12. Rohr, umfassend ein vernetztes Polyethylen, das eine MRS-Klassifikation gemäß der Norm ISO/TR 9080 von 12,5 aufweist.
